# FASCICULE DE BREVET EUROPEEN

(11) **EP 0 558 413 B1**
(45) Date de publication et mention de la délivrance du brevet: **27.03.1996**
(21) Numéro de dépôt: 93400481.3
(22) Date de dépôt: 25.02.1993
(51) Int. Cl.: F02N 15/02

(54) **Procédé de fabrication d'un lanceur de démarreur pour moteur à combustion interne et lanceur de démarreur obtenu par un tel procédé**
Herstellungsverfahren eines Anlassereinrückritzels für Verbrennungsmotor und mit diesem Verfahren hergestelltes Anlassereinrückritzel
Method of making a starter pinion for an internal combustion engine and starter pinion made by this method

(30) Priorité: 25.02.1992 FR 9202147
(43) Date de publication de la demande: 01.09.1993
(73) Titulaire: VALEO EQUIPEMENTS ELECTRIQUES MOTEUR, F-94000 Creteil (FR)
(72) Inventeur: Bonin, Viviane, F-38090 Villefontaine (FR); Serrano, Jean-François, F-69800 Saint Priest (FR)
(74) Mandataire: Gamonal, Didier

(56) Documents cités:
- EP-A- 0 369 867
- FR-A- 2 253 152

## Description

La présente invention a pour objet un procédé de fabrication d'un lanceur de démarreur pour moteur à combustion interne, et un lanceur de démarreur obtenu par un tel procédé.

Un lanceur de démarreur est constitué d'un pignon lanceur pouvant se déplacer axialement sur un arbre moteur jusqu'à son entrée en prise avec une couronne dentée située sur le volant moteur.

Au pignon lanceur, sont associées une roue libre et une douille d'entraînement rendues solidaires par un capot. L'étanchéité de la roue libre est assurée par deux demi-rondelles associées à un joint.

Un lanceur de ce type est décrit par exemple dans la demande de brevet français n° 88 14753.

Le procédé de fabrication d'un lanceur de ce type consiste, après présentation de la douille d'entraînement avec le pignon lanceur équipé de sa roue libre, à positionner sur la douille d'entraînement les deux demi-rondelles , de mettre en place le joint dans le capot, de présenter l'ensemble capot-joint sur l'ensemble pignon-douille - demi-rondelles puis de sertir le capot de manière à rendre solidaire l'ensemble des constituants.

Cette opération de sertissage est particulièrement délicate à réaliser, car il est indispensable que les deux demi-rondelles restent en permanence parfaitement jointes entre elles de manière à ne pas générer de fuite de graisse, ce qui conduirait à une destruction de l'ensemble du lanceur.

Dans le procédé décrit ci-dessus, c'est le joint qui assure le bon positionnement des deux demi-rondelles et, lors du sertissage du capot, sa compression garantit leur immobilisation totale.

La mise en place du joint dans le capot et son maintien dans une position précise est pratiquement impossible à réaliser de manière automatique et il en résulte pour l'ensemble du lanceur un surcoût inadmissible en particulier quand il s'agit d'une production en grande série comme c'est le cas dans le domaine automobile.

La présente invention résout ces problèmes et propose à cet effet un procédé de fabrication d'un lanceur de démarreur pour moteur à combustion interne comprenant un pignon lanceur pouvant se déplacer axialement sur un arbre moteur, une roue libre solidaire d'une douille d'entraînement par un capot, deux demi-rondelles assurant l'étanchéité de la roue libre et serrées entre le capot et une cage à cames de ladite roue libre, caractérisé en ce qu'il comprend les opérations suivantes :
- on ménage sur la périphérie extérieure du capot une pluralité de chanfreins de manière à former à l'intérieur du capot et en vis-à-vis des chanfreins une pluralité de crans saillants par refoulement de matière
- on positionne le pignon lanceur par rapport à la douille d'entraînement
- on met en place les deux demi-rondelles sur la douille d'entraînement
- on met en place le capot sur l'ensemble ainsi constitué
- on effectue le sertissage du capot de manière à ce que les demi-rondelles viennent s'emboutir dans les crans.

Selon d'autres caractéristiques de l'invention
- les chanfreins et donc les crans sont en nombre impair
- les chanfreins sont répartis angulairement de manière uniforme
- les chanfreins présentent une forme quadrangulaire
- les chanfreins sont de forme carrée.

La description qui va suivre fera mieux comprendre comment l'invention peut être réalisée en regard des dessins annexés dans lesquels :
- la figure 1 est une coupe axiale partielle d'un ensemble lanceur assemblé suivant l'invention ;
- la figure 2 est une coupe suivant la ligne B-B de la figure 3, à plus grande échelle, d'un capot suivant l'invention ;
- la figure 3 est une vue arrière du capot suivant la flèche F de la figure 2 ;
- la figure 4 est une coupe d'un détail du capot à plus grande échelle ;
- la figure 5 est une vue de face d'un détail du capot correspondant à la figure 4 ;
- la figure 6 est une coupe axiale d'une partie du lanceur assemblé à plus grande échelle.

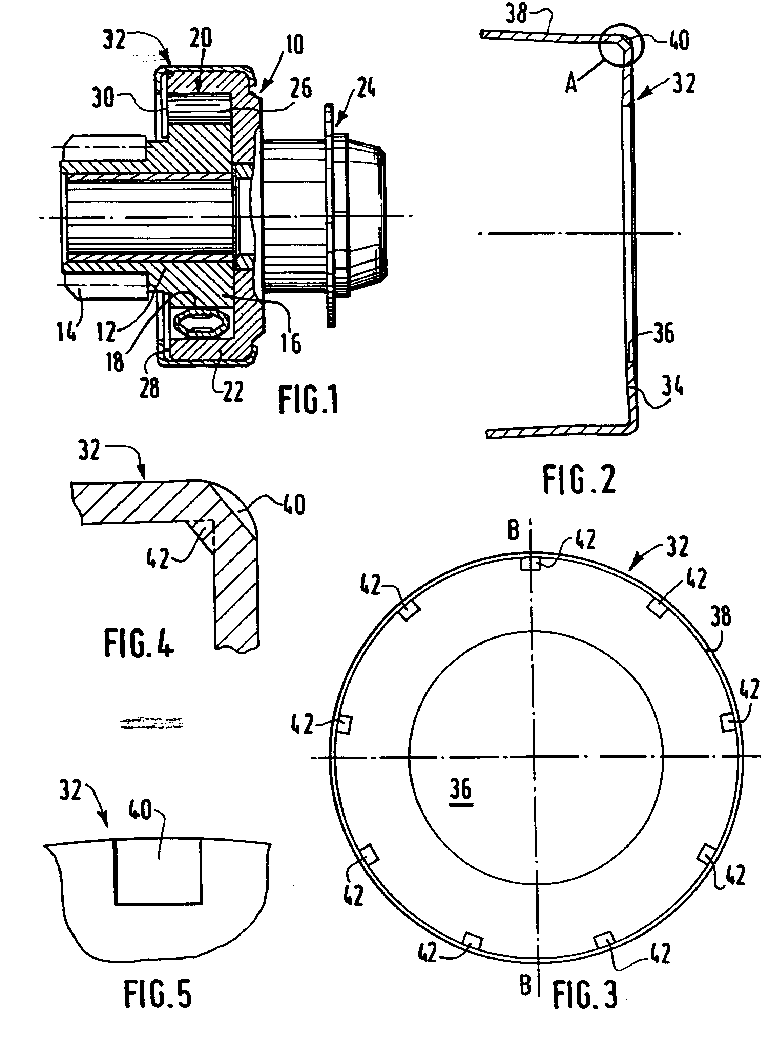

On se réfère tout d'abord à la figure 1, qui représente un lanceur 10 de démarreur pour moteur à combustion interne, le lanceur 10 étant complètement assemblé.

Ce lanceur 10 comprend un pignon lanceur 12 muni d'une denture 14 apte à engrener avec une couronne dentée (non représentée) située sur le volant moteur.

La partie arrière 16 du pignon lanceur 12 (à droite sur la figure) constitue la piste 18 d'une roue libre 20 dont la cage à cames 22 est associée de manière tournante à une douille d'entraînement 24. Bien entendu, entre la piste 18 et la cage 20 se trouve à la manière usuelle une série de galets chargés 26.

Deux demi-rondelles 28,30 assurent la fermeture et l'étanchéité de la roue libre 20.

L'ensemble ainsi constitué est rendu solidaire par sertissage d'un capot 32 qui va maintenant être décrit plus en détail en référence aux figures 2 à 5.

Le capot 32 se présente sous la forme générale d'une coupelle avec un fond plat 34 dans lequel est ménagé un trou 36, ledit fond plat se raccordant à une paroi cylindrique 38.

Le capot 32 est obtenu par emboutissage et découpage d'un flanc de tôle en aluminium.

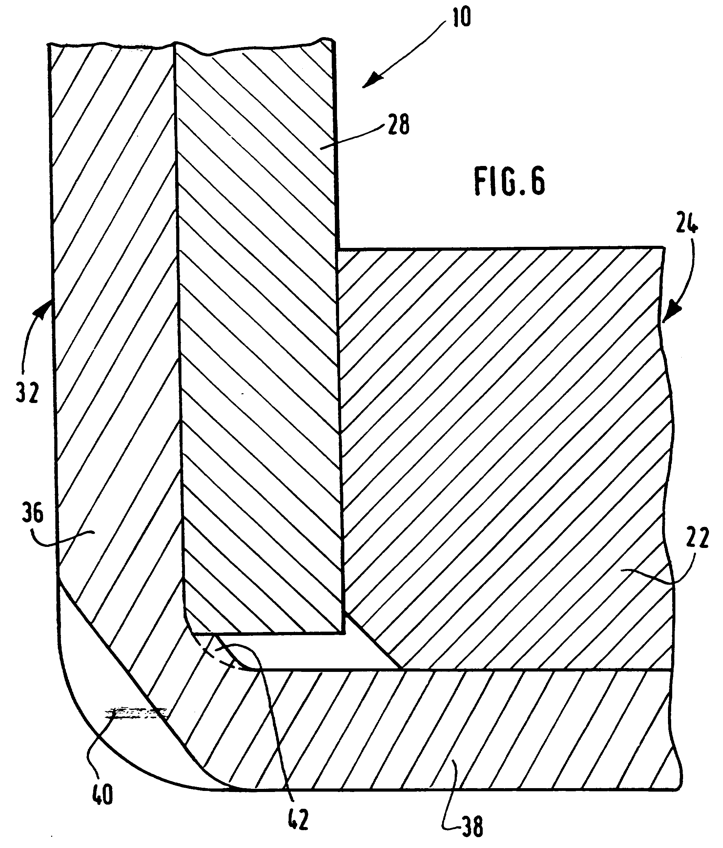

Suivant l'invention, lors de l'emboutissage du capot 32, on ménage à la périphérie extérieure du fond plat 34 une pluralité de chanfreins 40 (voir figures 4 et 5).

Ces chanfreins 40, obtenus par emboutissage, provoquent un refoulement de matière vers l'intérieur du capot 32 et il en résulte la formation de crans 42 saillants en vis-à-vis des chanfreins 40.

La formation de ces chanfreins 40 et par voie de conséquence des crans 42 constitue la première étape du procédé suivant l'invention.

Les étapes suivantes consistent successivement :
- à mettre en position le pignon lanceur 12 avec la douille d'entraînement 24 prééquipée du dispositif de roue libre 20
- à mettre en place les deux demi-rondelles 28 et 30 sur la douille d'entraînement
- à placer le capot 32 muni de ses crans 42 sur l'ensemble ainsi constitué
- à effectuer le sertissage du capot 32.

Lors de la mise en place du capot 32, les crans 42 permettent un positionnement précis des demi-rondelles 28 et 30 l'une par rapport à l'autre, celles-ci étant naturellement serrées l'une sur l'autre par la réaction desdits crans 32.

Lors de l'opération de sertissage, les demi-rondelles 28 et 30 viennent s'emboutir dans les crans 32 ainsi qu'il est montré en particulier figure 6 ce qui garantit leur immobilisation totale.

L'ensemble de ces opérations est facilement automatisable, ce qui réduit de manière considérable le coût de l'ensemble du lanceur.

Toutes les pièces le constituant étant rigides, leur positionnement respectif est précis et assure une fiabilité de fabrication remarquable.

On remarquera en particulier sur la figure 3, que les crans 42 ménagés sur le capot 32 sont répartis angulairement de manière uniforme et qu'ils sont en nombre impair (neuf dans l'exemple représenté) de manière à ce qu'aucun des crans 42 ne soit diamétralement opposé à un autre cran 42.

Cette disposition permet d'éviter tout chevauchement des demi-rondelles 28 et 30 lors de l'opération de sertissage.

De préférence les chanfreins 40 sont de forme carrée, comme représenté en particulier à la figure 5.

Sa forme des chanfreins 40 peut également être rectangulaire ou même quadrangulaire sans pour cela sortir du cadre de l'invention.

## Revendications

1. Procédé de fabrication d'un lanceur de démarreur (10) pour moteur à combustion interne comprenant un pignon lanceur (12), pouvant se déplacer axialement sur un arbre moteur, une roue libre (20) solidaire d'une douille d'entraînement (24) par un capot (32), deux demi-rondelles (28,30) assurant l'étanchéité de la roue libre (20) et serrées entre le capot (32) et une cage à cames (32) de ladite roue libre (20), caractérisé en ce qu'il comprend les opérations suivantes :
- on ménage sur la périphérie extérieure du capot (32) une pluralité de chanfreins (40) de manière à former à l'intérieur du capot (32) et en vis-à-vis des chanfreins (40) une pluralité de crans saillants (42) par refoulement de matière
- on positionne le pignon lanceur (12) par rapport à la douille d'entraînement (24)
- on met en place les deux demi-rondelles (28,30) sur la douille d'entraînement (24)
- on met en place le capot (32) sur l'ensemble ainsi constitué
- on effectue le sertissage du capot (32) de manière à ce que les demi-rondelles (28,30) viennent s'emboutir dans les crans (42).

2. Procédé de fabrication selon la revendication 1, caractérisé en ce que les chanfreins (40) et donc les crans (42) sont en nombre impair.

3. Procédé de fabrication selon la revendication 2, caractérisé en ce que les chanfreins (40) sont répartis angulairement de manière uniforme.

4. Procédé de fabrication selon l'une quelconque des revendications précédentes, caractérisé en ce que les chanfreins (40) présentent une forme quadrangulaire.

5. Procédé de fabrication selon la revendication 4, caractérisé en ce que les chanfreins (40) sont de forme carrée.

## Patentansprüche

1. Herstellungsverfahren eines Anlassereinrückritzels (10) für Verbrennungsmotoren, bestehend aus einem Anlasserritzel (12), das sich auf einer Antriebswelle axial verschieben kann, einem Freilauf (20), der durch eine Kappe (32) fest mit einer Mitnehmerhülse (24) verbunden ist, zwei Halbscheiben (28, 30) für die Abdichtung des Freilaufs (20), die zwischen der Kappe (32) und einem Nockenkäfig (32) des besagten Freilaufs (20) eingespannt sind, **dadurch gekennzeichnet,** daß es die folgenden Vorgänge umfaßt:
- am Außenumfang der Kappe (32) wird eine Mehrzahl von Fasen (40) vorgesehen, so daß durch Materialstauchung im Innern der Kappe (32) und gegenüber den Fasen (40) eine Mehrzahl von vorstehenden Rasten (42) gebildet wird;
- das Anlasserritzel (12) wird im Verhältnis zur Mitnehmerhülse (24) positioniert;
- die beiden Halbscheiben (28, 30) werden auf der Mitnehmerhülse (24) eingesetzt;
- die Kappe (32) wird auf der so gebildeten Baugruppe aufgesetzt;
- die Kappe (32) wird so aufgeklemmt, daß sich die Halbscheiben (28, 30) in die Rasten (42) eindrücken.

2. Herstellungsverfahren nach Anspruch 1, **dadurch gekennzeichnet**, folglich auch die Rasten (42) in ungerader Zahl vorgesehen sind.

3. Herstellungsverfahren nach Anspruch 2, **dadurch gekennzeichnet**, daß die Fasen (40) gleichmäßig winklig verteilt sind.

4. Herstellungsverfahren nach einem der vorangehenden Ansprüche, **dadurch gekennzeichnet,** daß die Fasen (40) eine viereckige Form aufweisen.

5. Herstellungsverfahren nach Anspruch 4, **dadurch gekennzeichnet,** daß die Fasen (40) eine quadratische Form besitzen.

## Claims

1. A method of manufacture of a starter head (10) for an internal combustion engine, comprising a starter pinion (12) which is displaceable axially on a motor shaft, a free wheel (20) fixed to a driving sleeve (24) by means of a cap (32), two half-rings (28, 30) for sealing the free wheel (20) and being gripped between the cap (32) and a camming cage (22) of the said free wheel (20), characterised in that it includes the following operations:
- a set of chamfers (40) is formed on the outer periphery of the cap (32) in such a way as to form, by flow of material within the cap (32) and in alignment with the chamfers (40), a set of projecting nibs (42);
- the starter pinion (12) is positioned with respect to the driving sleeve (24);
- the two half rings (28, 30) are positioned on the driving sleeve (24);
- the cap (32) is positioned on the sub-assembly thus formed;
- a seaming operation is carried out on the cap (32), in such a way that the half rings (28, 30) become embedded in the nibs (42).

2. A method of manufacture according to Claim 1, characterised in that there is an odd number of the chamfers (40), and therefore of the nibs (42).

3. A method of manufacture according to Claim 2, characterised in that the chamfers (40) are uniformly spaced apart circumferentially.

4. A method of manufacture according to one of the preceding Claims, characterised in that the chamfers (40) are quadrangular in form.

5. A method of manufacture according to Claim 4, characterised in that the chamfers (40) are square.
